# EUROPÄISCHE PATENTSCHRIFT

(11) **EP 4 374 022 B1**
(45) Veröffentlichungstag und Bekanntmachung des Hinweises auf die Patenterteilung: **09.04.2025**
(21) Anmeldenummer: 23729714.8
(22) Anmeldetag: 25.05.2023
(51) Int. Cl.: E04D 5/02, D06N 3/18, D06N 5/00, E04D 5/10, G06K 19/02, G06K 19/077, E04B 1/76

(54) **BAUMATERIALVERSTÄRKUNGSLAGE MIT DATENTRÄGER**
CONSTRUCTION MATERIAL REINFORCEMENT LAYER WITH A DATA CARRIER
COUCHE DE RENFORCEMENT DE MATÉRIAU DE CONSTRUCTION COMPRENANT UN SUPPORT DE DONNÉES

(30) Priorität: 25.05.2022 LU 102955
(43) Veröffentlichungstag der Anmeldung: 29.05.2024
(60) Teilanmeldung: 24159058.7
(73) Patentinhaber: Carlisle Construction Materials GmbH, 99880 Waltershausen (DE)
(72) Erfinder: SOCHOR, Josef, 99880 Waltershausen (DE)
(74) Vertreter: Paustian & Partner Patentanwälte mbB
(86) Internationale Anmeldenummer: PCT/EP2023/064134
(87) Internationale Veröffentlichungsnummer: WO 2023/227753

(56) Entgegenhaltungen:
- EP-A1- 2 128 801
- JP-A- 2013 142 950
- US-A1- 2010 039 226
- US-A1- 2011 027 520
- WANG YANWEN ET AL: "TagBreathe: Monitor Breathing with Commodity RFID Systems", IEEE TRANSACTIONS ON MOBILE COMPUTING, IEEE SERVICE CENTER, LOS ALAMITOS, CA, US, vol. 19, no. 4, 25 February 2019 (2019-02-25), pages 969 - 981, XP011776429, ISSN: 1536-1233, [retrieved on 20200304], DOI: 10.1109/TMC.2019.2900214

## Beschreibung

Die vorliegende Offenbarung liegt im Bereich der Baustoffe und insbesondere im Bereich der smarten Baustoffe und bezieht sich auf eine Baumaterialverstärkungslage und Baumaterialien umfassend eine solche Verstärkung.

Baumaterialien im Sinne dieser Anmeldung können Putzgitter, Dichtbahnen, Dampfsperrbahnen, Gasmembranen, Geomembranen, Beton- Gussasphalt-Schichten, Isolierungen (z.B. Aluschicht mit Mineralwolle), Schalschutzplatten, Sonnenschutz, Beschattung oder Dämmstoffe sein. Dabei kann eine optionale obere-, untere- oder beidseitige Kaschierung vorhanden sein. Für gewöhnlich haben Baumaterialverstärkungslagen und die meisten Baumaterialien eine Längsrichtung (z.B. Putzgitter bzw. Putzverstärkungsgitter, rechteckige Dämmplatten, Dämmstoffrollen, Dichtungs- bzw. Dachbahnen, etc.). Hier verwendete Richtungsangaben wie "längs", "quer" oder "diagonal" beziehen sich auf eine solche Längsrichtung. Weiterhin können solche Baumaterialien flächige Materialien sein. Weiterhin können Baumaterialverstärkungslagen (Festigkeitsträger) als endlos Material mit einer bestimmten Breite und einer Längsrichtung, die zugleich auch Produktions- bzw. Abzugrichtung ist hergestellt (wie z.B. bei Putzgittern oder Dachbahnen) werden.

Bei Baumaterialen kann eine Identifikation, gerade in einem Einbauzustand und nach längerer Zeit schwierig bis unmöglich sein. So kann Information über z.B. die Charge und/oder das Einbaudatum verloren gehen und z.B. im Garantie-Management zu Problemen führen. Auch kann eine eindeutige Identifikation manchmal nicht zerstörungsfrei durchgeführt werden. Dokumente US2010039226A1, EP2326766B1, US10546277B2 und US8284028B2 behandeln Dachbahnen mit RFID-Tags.

Die vorliegende Erfindung hat es daher zur Aufgabe eine Baumaterialverstärkungslage und Baumaterialien umfassend eine solche Verstärkungslage vorzustellen, die eine digitale Identifikation und Rückverfolgbarkeit auch nach längerer Zeit und zerstörungsfrei ermöglicht.

Diese Aufgabe wird durch die beigefügten unabhängigen Ansprüche gelöst.

Nach einem Aspekt der vorliegenden Offenbarung umfasst eine Baumaterialverstärkungslage zumindest eine Verstärkung. Dabei ist zumindest ein Datenträger mit der Verstärkung verbunden. Die Verstärkung kann zumindest eines umfassen von einer multiaxialen Verstärkung, zumindest einer Textilie, Gewebe(n), Gelege(n), Vlies(en) aus Glas, Carbon und Aramid und /oder Laminate daraus. Die Verstärkung kann auch (zusätzlich der ausschließlich) Stoffe auf Basis von Polyester, PP, PE und/oder reißfestem Material sowie Gelege-Vlies-, Gelege-Matten und Hybrid-Gewebe bzw. -Gelege umfassen. Der zumindest eine Datenträger wird von einem Faden umfasst. Dabei ist der Faden mit der Verstärkung verbunden. Dies kann den Vorteil haben, dass der zumindest eine oder die mehreren Datenträger einfacher verarbeitet und/oder mit Informationen bespielt werden können. Der Faden kann zumindest eines umfassen von Polyester, Baumwolle, PP, PE, Aramid und/oder Glas. Weiterhin vorteilhaft kann sein, dass die benötigte zumindest eine Antenne des Datenträgers entlang des Fadens befestigt werden kann. Die Befestigung des zumindest einen Datenträgers kann z.B. ein Aufbringen auf den Faden und/oder ein Einarbeiten in den Faden sein. Dies kann den Vorteil haben, dass eine robuste und auf unterschiedlichste Anwendungen anpassbare Baumaterialverstärkungslage erlangt werden kann, deren zumindest einer Datenträger ausgelesen werden kann.

Die Datenträger umfassen RFID-Datenträger bzw. jede andere passende passive Datenträgerform, die über einem Abstand ausgelesen werden kann. Bevorzugt sind die Datenträger so klein wie möglich, müssen jedoch so beschaffen sein, dass sie dem Herstellungsumfeld bei der Herstellung der Baumaterialverstärkungslage bzw. der Baumaterialien widerstehen können (z.B. mechanische, thermische und chemische Belastungen) und keine sichtbaren sowie die Funktion beeinträchtigenden Produktfehler entstehen lassen.

Nach einem weiteren Aspekt der vorliegenden Offenbarung umfasst die (Baumaterial) Verstärkungslage zumindest eines von Vlies und/oder gerichtetem Gelege. Dies kann den Vorteil haben, dass die Verstärkungslage auf den jeweiligen Einsatzzweck angepasst werden kann.

Nach einem weiteren Aspekt der vorliegenden Offenbarung ist bei einer Baumaterialverstärkungslage der Datenträger in die Verstärkung eingebracht. Dies kann den Vorteil haben, dass die Verarbeitung der Baumaterialverstärkungslage bzw. des zumindest einen Datenträgers in einem Baumaterial vereinfacht wird.

Nach einem weiteren Aspekt der vorliegenden Offenbarung umfasst zumindest eines von dem Datenträger, dem Faden oder der Verstärkung eine Imprägnierung. Dies kann den Vorteil haben, dass der Datenträger oder Faden zumindest gegen eines von Kapillarbildung, chemischer Angriff, mechanischen Belastungen wie Biegung und Druck oder Temperatureinflüssen geschützt ist.

Nach einem weiteren Aspekt der vorliegenden Offenbarung ist der Faden in das gerichtete Gelege eingebracht. Dies kann den Vorteil haben, dass das Gelege mit dem zumindest einen Datenträger einfacher verarbeitet werden kann.

Nach einem weiteren Aspekt der vorliegenden Offenbarung ist der Faden in der Verstärkung oder dem gerichteten Gelege in zumindest einer der folgenden Richtungen in Bezug auf eine Längsrichtung der Verstärkungslage eingebracht: quer, längs und/oder diagonal. Dies kann den Vorteil haben, dass die Anordnung auf den jeweiligen Einsatzzweck angepasst werden kann.

Nach einem weiteren Aspekt der vorliegenden Offenbarung wird bei einer Baumaterialverstärkungslage der Faden in Gelege und in andere ggf. multiaxial ausgerichtete Gelege (z.B. unidirektional, bidirektional, biaxial, triaxial und quadraxial) eingebracht. Der Festigkeitsträger kann verschiedene Konstruktionen und/oder Maschenweiten haben.

Nach einem Aspekt der vorliegenden Offenbarung umfasst ein Baumaterial eine Baumaterialverstärkungslage nach einem der obigen Aspekte. Dies kann den Vorteil haben, dass das Baumaterial stabil ist und auslesbare Informationen aufweisen kann.

Nach einem Aspekt der vorliegenden Offenbarung umfasst das Baumaterial eine Lage, welche zumindest eines von EPDM, Butyl, PVC, EVA, FPO, TPE, PP, PE, PA oder anderen Elastomer- und Kunststoffschichten umfasst. Dies kann den Vorteil haben, dass das Baumaterial auf den jeweiligen Einsatzzweck angepasst werden kann.

Nach einem Aspekt der vorliegenden Offenbarung umfasst das Baumaterial eine Verstärkungslage und eine Lage mit Bitumen, wobei die Lage mit Bitumen die Baumaterialverstärkungslage umfasst. Dies kann den Vorteil haben, dass die Lage mit Bitumen und damit das Baumaterial stabilisiert wird. Die Verstärkungslage kann in die Lage mit Bitumen eingebracht sein. Dann ergibt sich der zusätzliche Vorteil, dass der zumindest einen Datenträger durch die Lage mit Bitumen geschützt werden kann.

Nach einem Aspekt der vorliegenden Offenbarung umfasst die zumindest eine Lage oder die zumindest eine Lage mit Bitumen die Baumaterialverstärkungslage.

Nach einem Aspekt der vorliegenden Offenbarung umfasst das Baumaterial zumindest zwei Lagen von der Lage und/oder der Lage mit Bitumen und die Baumaterialverstärkungslage zwischen den Lagen angeordnet ist.

Mit anderen Worten kann die Baumaterialverstärkungslage bei einem mehrschichtigen Aufbau des Baumaterials zwischen den Lagen angeordnet sein. Auch können mehrere Baumaterialverstärkungslagen umfasst werden und diese Baumaterialverstärkungslagen können zwischen und/oder in den Lagen angeordnet werden. Das voran genannte gilt für die gesamte Offenbarung.

Nach einem Aspekt der vorliegenden Offenbarung umfasst ein Baumaterial zumindest eine Kaschierlage, wobei die Kaschierlage die Baumaterialverstärkungslage umfasst. Das kann den Vorteil haben, dass die Kaschierung mit der Baumaterialverstärkungslage keiner Deformation unterliegt, sie hat dimensionsstabilisierende Wirkung, insbesondere bei Temperatur- und äußerer, mechanischer Beanspruchung.

### Kurze Beschreibung der Figuren

Weitere Charakteristika und Vorteile der Erfindung werden im Verlauf der nachfolgenden Beschreibung ihrer Ausführungsformen ersichtlich, welche nur beispielhaft und nicht beschränkend in Zusammenschau mit den beigefügten Zeichnungen gegeben wird. In den Figuren ist:
Figur 1 eine schematische Darstellung einer Ausführungsform der vorliegenden Anmeldung.
Figur 2 eine schematische Darstellung einer weiteren Ausführungsform der vorliegenden Anmeldung.
Figur 3 eine schematische Darstellung einer weiteren Ausführungsform der vorliegenden Anmeldung.
Figur 4 eine schematische Darstellung einer weiteren Ausführungsform der vorliegenden Anmeldung.
Figur 5 eine schematische Darstellung einer weiteren Ausführungsform der vorliegenden Anmeldung.
Figur 6 eine schematische Darstellung einer weiteren Ausführungsform der vorliegenden Anmeldung.

Einführend sei festgehalten, dass in den unterschiedlich beschriebenen Ausführungsbeispielen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

### Detaillierte Beschreibung der Ausführungsformen

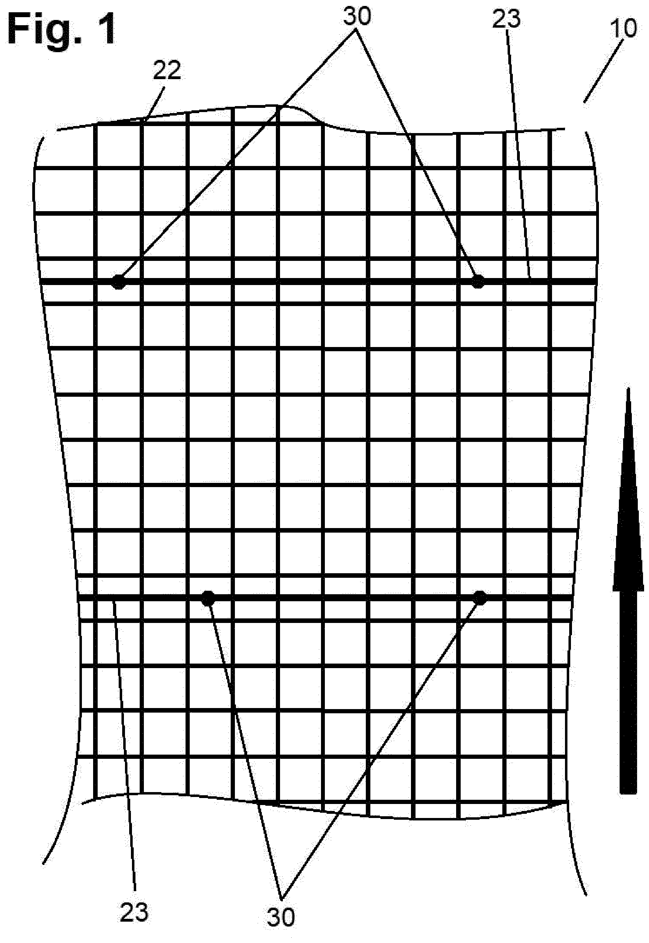

Es wird anfänglich Bezug genommen auf die Figur 1, welche einen Ausschnitt einer Baumaterialverstärkungslage 10 zeigt. Insbesondere ist ein gerichtetes Gelege 22 gezeigt, wie man es aus der Verstärkung von Dachbahnen, Betonschichten, Isoliermaterial oder Putzgittern kennt. Typischerweise hat eine Baumaterialverstärkungslage 10 eine Längs- bzw. Abzugsrichtung in welcher die Baumaterialverstärkungslage 10 als Endlosmaterial produziert wird (in den Figuren 1 bis 3 durch den Pfeil dargestellt) und eine Querrichtung, in welcher die Erstreckung normalerweise festgelegt ist (z.B. durch die Dimensionen des Maschinenparks). Figuren 1 bis 3 zeigen beliebige Ausschnitte aus Baumaterialverstärkungslagen 10 mit gerichtetem Gelege 22. Jedoch gelten die Ausführungen für Baumaterialverstärkungslagen 10 mit Vlies 21 mutatis mutandis.

Das gerichtete Gewebe umfasst Längsfäden (parallel zur Pfeilrichtung) und Querfäden (quer zur Pfeilrichtung). In der dargestellten Ausführungsform ist eine Vielzahl von Datenträgern 30 von einem Faden 23 (ggf. inklusive einer Imprägnierung 24) umfasst. Der Faden 23 mit den Datenträgern 30 verläuft in der in Fig. 1 dargestellten Ausführungsform parallel und zwischen zwei Querfäden. Es sind beispielhaft zwei Fäden 23 gezeigt. Wäre die Baumaterialverstärkungslage 10 ein Vlies 21, so wäre der Faden 23 in der Querrichtung in und/oder auf das Vlies 21 aufgebracht. Die Datenträger 30 können auch direkt mit der Baumaterialverstärkungslage 10 verbunden werden. Auch kann der Faden 23 anstelle eines der Fäden des Geleges 22 direkt in das Gelege 22 eingebracht (z.B. eingewebt) werden. Der Abstand zwischen den Datenträgern 30 ist beliebig. Der Abstand zwischen den Fäden 23 (zwei gezeigt) und die Anzahl der Fäden 23 in der Baumaterialverstärkungslage 10 sind beliebig.

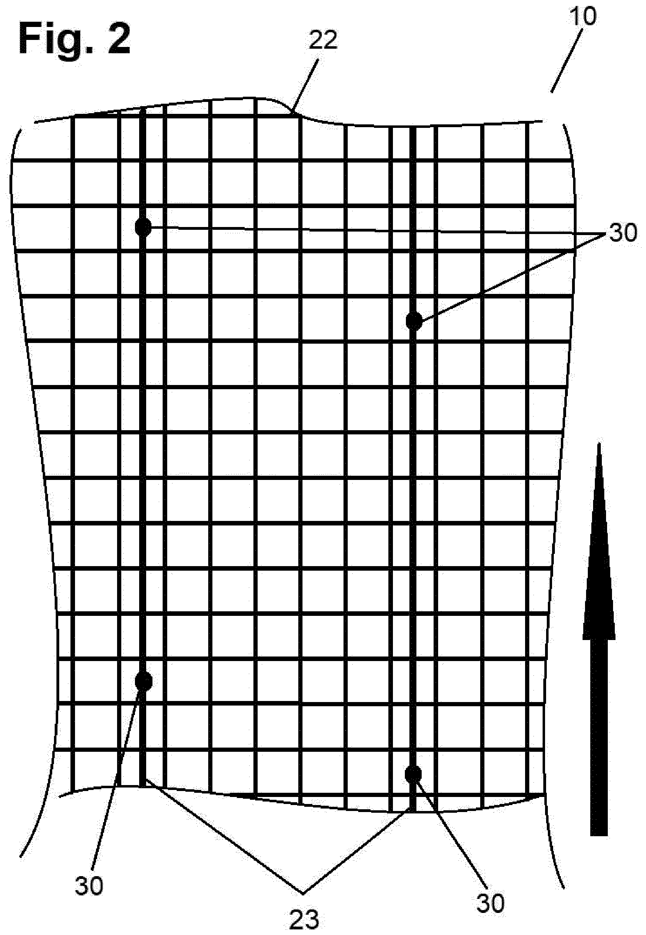

Die Ausführungsform der Fig. 2 ist ähnlich zur der in Fig. 1 gezeigten Ausführungsform. Im Unterschied sind die zwei gezeigten Fäden 23 mit den Datenträgern 30 parallel zur Längsrichtung (Pfeil) bzw. den Längsfäden angeordnet. Auch hier könnten die Fäden 23 an und/oder in ein Vlies 21 befestigt werden, wenn die Baumaterialverstärkungslage 10 dies anstelle des gezeigten gerichteten Geleges 22 umfassen würde. Auch in der Ausführungsform der Fig. 2 können die Datenträger 30 direkt mit der Baumaterialverstärkungslage 10 verbunden werden. Auch kann der Faden 23 anstelle eines der Fäden des Geleges 22 direkt in das Gelege 22 eingebracht (z.B. eingewebt) werden. Jede beliebige Anzahl der Fäden 23 ist möglich. Weiterhin ist jeder beliebige Abstand zwischen den Fäden 23 und Datenträgern 30 möglich.

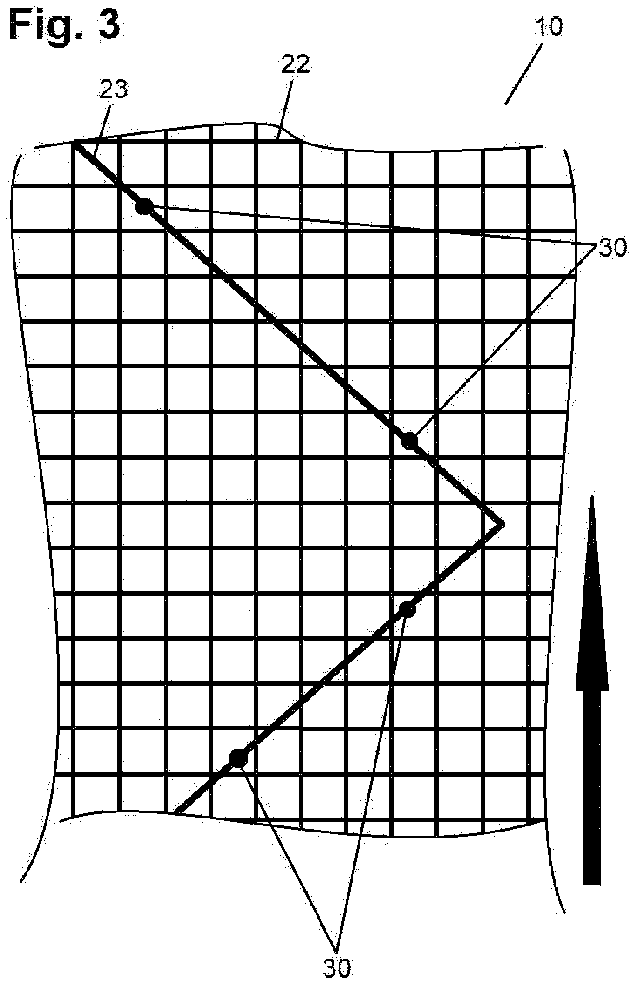

Die Ausführungsform der Fig. 3 ist ähnlich zur den in Figuren 1 und 2 gezeigten Ausführungsformen. Im Unterschied zu ihnen verläuft der Faden 23 mit den Datenträgern 30 im Zickzack in Längsrichtung (Pfeilrichtung). Dies könnte auch in Querrichtung (quer zur Pfeilrichtung) oder in jeder anderen Form (z.B. wellenförmig) sein. Der Faden 23 ist durchgehend dargestellt, kann aber auch segmentiert (nicht durchgängig) sein.

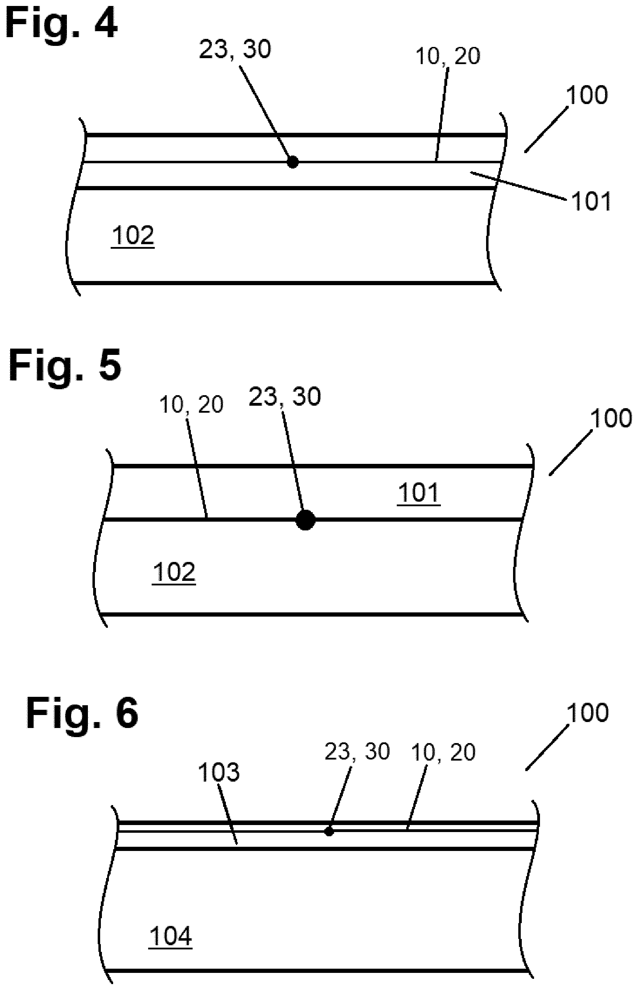

In Fig. 4 wird ein Baumaterial 100 mit einer Baumaterialverstärkungslage 10 gezeigt. Die Baumaterialverstärkungslage 10 umfasst zumindest einen Datenträger 30, welcher an einem Faden 23 befestigt ist. Die Baumaterialverstärkungslage 10 ist in eine Lage Bitumen 101 eingebracht. Dies kann jedoch auch zumindest eines sein von EPDM, Butyl, PVC, EVA, FPO, TPE, PP, PE, PA oder anderen Elastomeren bzw. Kunststoffen. Die Lage Bitumen 101 ist auf eine Lage 102 aufgebracht, welche zumindest eines umfassen kann von EPDM, Butyl, PVC, EVA, FPO, TPE, PP, PE, PA oder anderen Elastomeren bzw. Kunststoffen. Die Position der Baumaterialverstärkungslage 10 ist mittig in der Lage mit Bitumen 101 dargestellt. Jedoch ist die Position beliebig. Es ist zu bevorzugen, dass der zumindest eine Datenträger 30 vollständig durch das Bitumen (oder anderes Material) eingeschlossen ist, um ihn vor äußeren Einflüssen (z.B. Witterung) zu schützen.

Fig. 5 zeigt eine Ausführungsform, ähnlich zu der in Fig. 4. Die obigen Materialangaben für die gezeigten Lagen sind auch hier anwendbar. In der gezeigten Ausführungsform der Fig. 5 ist die Baumaterialverstärkungslage 10 mit dem zumindest einen Datenträger 30 an bzw. in einem Faden 23 zwischen der Lage mit Bitumen 101 und der Lage 102 angeordnet. Es kann auch zweimal die Lage 102 (ggf. aus unterschiedlichen Materialien) oder zweimal eine Lage mit Bitumen 101 vorhanden sein, wobei die Baumaterialverstärkungslage 10 jeweils zwischen den Lagen angeordnet ist.

Fig. 6 zeigt eine Ausführungsform eines Baumaterials 100 umfassend eine Kaschierlage 103 und eine Dämmlage 104. Die Kaschierlage 103 umfasst die Baumaterialverstärkungslage 10 mit dem zumindest einen Datenträger welcher ggf. mit einem Faden 23 verbunden ist. Die Baumaterialverstärkungslage 10 kann auch zwischen der Kaschierlage 103 und Dämmlage 104 eingebracht sein. Die Dämmlage 104 kann jedes bekannte Dämmmaterial umfassen.

Für alle gezeigten Ausführungsformen gilt, dass der Faden 23 mit dem zumindest einen Datenträger 30 und/oder zumindest ein Datenträger 30 bei der Herstellung eines Baumaterials 100 auf die Baumaterialverstärkungslage 10 aufgelegt werden kann, aber auch bereits mit der Baumaterialverstärkungslage 10 aufgelegt werden kann, aber auch bereits mit der und dann durch das die Baumaterialverstärkungslage 10 verbunden sein kann und dann durch das die Baumaterialverstärkungslage 10 umgebende Material, das nachfolgend aufgebracht wird fixiert wird. Jede der in Zusammenhang mit den Figuren 1 bis 3 gemachten Angaben kann auf die Ausführungsformen der Figuren 4 bis 6 angewendet werden. In den Figuren 1 bis 3 sind gerichtete Gelege mit rechteckigen Maschen offenbart. Das gerichtete Gelege kann jede beliebige multiaxiale Maschenform aufweisen (z.B. sechs- oder achteckig und/oder auch unidirektional, bidirektional, biaxial, triaxial und quadraxial), auch sind 3D-Gewebe möglich.

### Bezugszeichenliste

- 10: Baumaterialverstärkungslage
- 20: Verstärkung
- 21: Vlies
- 22: gerichtetes Gelege
- 23: Faden
- 24: Imprägnierung
- 30: Datenträger
- 100: Baumaterial
- 101: Lage mit Bitumen
- 102: Lage
- 103: Kaschierlage
- 104: Dämmlage

## Patentansprüche

1. Baumaterialverstärkungslage (10) umfassend zumindest eine Verstärkung (20), wobei zumindest ein Datenträger (30) mit der Verstärkung verbunden ist, **dadurch gekennzeichnet, dass** der zumindest einen Datenträger (30) von einem Faden (23) umfasst wird, wobei der Faden mit der Verstärkung (20) verbunden ist.

2. Baumaterialverstärkungslage (10) nach Anspruch 1, wobei die Verstärkung (20) zumindest eines umfasst von Vlies (21) und/oder gerichtetem Gelege (22).

3. Baumaterialverstärkungslage (10) nach Anspruch 1 oder 2, wobei der Datenträger in die Verstärkung (20) eingebracht ist.

4. Baumaterialverstärkungslage (10) nach einem der vorangegangenen Ansprüche, wobei zumindest eines von dem Datenträger (30), dem Faden (23) oder der Verstärkung (20) eine Imprägnierung umfasst.

5. Baumaterialverstärkungslage (10) nach einem der vorangegangenen Ansprüche, wobei der Faden (23) in das gerichtete Gelege (22) eingebracht ist.

6. Baumaterialverstärkungslage (10) nach einem der Ansprüche 3 bis 5, wobei der Faden (23) in der Verstärkung (20) oder dem gerichteten Gelege (22) in zumindest einer der folgenden Richtungen in Bezug auf eine Längsrichtung der Baumaterialverstärkungslage eingebracht ist: quer, längs und/oder diagonal.

7. Baumaterialverstärkungslage (10) nach Anspruch 3 bis 6 wobei der eingebrachte Faden (23) in Gelege (22) und in multiaxial ausgerichtete Gelege eingebracht ist.

8. Baumaterial (100) umfassend eine Baumaterialverstärkungslage (10) nach einem der Ansprüche 1 bis 7.

9. Baumaterial (100) nach Anspruch 8, weiterhin umfassend zumindest eine Lage (102) umfassend zumindest eines von EPDM, Butyl, PVC, EVA, FPO, TPE, PP, PE, PA.

10. Baumaterial (100) nach einem der Ansprüche 8 oder 9, weiterhin umfassend zumindest eine Lage mit Bitumen (101).

11. Baumaterial (100) nach einem der Ansprüche 9 oder 10, wobei die zumindest eine Lage (102) oder die zumindest eine Lage mit Bitumen (101) die Baumaterialverstärkungslage (10) umfassen.

12. Baumaterial (100) nach einem der Ansprüche 9 bis 11, wobei zumindest zwei Lagen von der Lage (102) und/oder der Lage mit Bitumen (101) umfasst sind und die Baumaterialverstärkungslage (10) zwischen den Lagen angeordnet ist.

13. Baumaterial (100) nach einem der Ansprüche 8 bis 12, weiterhin umfassend zumindest eine Kaschierlage (103), wobei die Kaschierlage die Baumaterialverstärkungslage (10) umfasst.

14. Baumaterial (100) nach einem der Ansprüche 8 bis 13, weiterhin umfassend eine Dämmlage (104), wobei die Baumaterialverstärkungslage (10) an oder in der Dämmlage (104) angeordnet sein kann.

## Claims

1. Building material reinforcement layer (10) comprising at least one reinforcement (20), wherein at least one data carrier (30) is connected to the reinforcement, wherein the at least one data carrier (30) is comprised by a thread (23), wherein the thread is connected to the reinforcement (20).

2. Building material reinforcement layer (10) according to claim 1, wherein the reinforcement (20) comprises at least one of fleece (21) and/or oriented scrim (22).

3. Building material reinforcement layer (10) according to claim 1 or 2, wherein the data carrier is introduced into the reinforcement (20).

4. Building material reinforcement layer (10) according to one of the preceding claims, wherein at least one of the data carrier (30), the thread (23) or the reinforcement (20) comprises an impregnation.

5. Building material reinforcement layer (10) according to one of the preceding claims, wherein the thread (23) is introduced into the oriented scrim (22).

6. Building material reinforcement layer (10) according to one of the claims 3 to 5, wherein the thread (23) is introduced into the reinforcement (20) or the oriented scrim (22) in at least one of the following directions with respect to a longitudinal direction of the building material reinforcing layer: transversely, longitudinally and/or diagonally.

7. Building material reinforcement layer (10) according to claims 3 to 6, wherein the thread (23) is introduced into the laid scrim (22) and into multiaxially aligned laid scrims.

8. Building material (100) comprising a structural material reinforcing layer (10) according to one of claims 1 to 7.

9. Building material (100) according to claim 8, further comprising at least one layer (102) comprising at least one of EPDM, butyl, PVC, EVA, FPO, TPE, PP, PE, PA.

10. Building material (100) according to any one of claims 8 or 9, further comprising at least one layer comprising bitumen (101).

11. Building material (100) according to one of claims 9 or 10, wherein the at least one layer (102) or the at least one layer with bitumen (101) comprise the building material reinforcement layer (10).

12. Building material (100) according to any one of claims 9 to 11, wherein at least two layers of the layer (102) and/or the layer with bitumen (101) are comprised and the building material reinforcing layer (10) is arranged between the layers.

13. Building material (100) according to one of claims 8 to 12, further comprising at least one laminating layer (103), the laminating layer comprising the building material reinforcing layer (10).

14. Building material (100) according to one of claims 8 to 13, further comprising an insulating layer (104), wherein the building material reinforcing layer (10) can be arranged on or in the insulating layer (104).

## Revendications

1. Couche de renforcement pour matériau de construction (10) comprenant au moins un renfort (20), au moins un support de données (30) étant relié au renfort, le au moins un support de données (30) étant compris d'un fil (23), le fil étant relié au renfort (20).

2. Couche de renforcement pour matériau de construction (10) selon la revendication 1, dans laquelle le renforcement (20) comprend au moins un élément parmi un non-tissé (21) et/ou un tissu orienté (22).

3. Couche de renforcement pour matériau de construction (10) selon la revendication 1 ou 2, dans laquelle le support de données est inséré dans le renforcement (20).

4. Couche de renforcement de matériau de construction (10) selon l'une des revendications précédentes, dans laquelle au moins l'un parmi le support de données (30), le fil (23) ou le renforcement (20) comprend une imprégnation.

5. Couche de renforcement de matériau de construction (10) selon l'une des revendications précédentes, le fil (23) étant introduit dans le tissu orienté (22).

6. Couche de renforcement de matériau de construction (10) selon l'une des revendications 3 à 5, dans laquelle le fil (23) est inséré dans le renforcement (20) ou dans le tissu orienté (22) dans au moins l'une des directions suivantes par rapport à une direction longitudinale de la couche de renforcement de matériau de construction : transversalement, longitudinalement et/ou en diagonale.

7. Couche de renforcement de matériau de construction (10) selon l'une des revendications 3 à 6, dans laquelle le fil (23) est inséré dans des tissus orientés (22) et dans des tissus orientés de manière multiaxiale.

8. Matériau de construction (100) comprenant une couche de renforcement de matériau de construction (10) selon l'une des revendications 1 à 7.

9. Matériau de construction (100) selon la revendication 8, comprenant en outre au moins une couche (102) comprenant au moins l'un des matériaux suivants: EPDM, butyle, PVC, EVA, FPO, TPE, PP, PE, PA.

10. Matériau de construction (100) selon l'une des revendications 8 ou 9, comprenant en outre au moins une couche de bitume (101).

11. Matériau de construction (100) selon l'une des revendications 9 ou 10, dans lequel la au moins une couche (102) ou la au moins une couche avec du bitume (101) comprend la couche de renforcement du matériau de construction (10).

12. Matériau de construction (100) selon l'une des revendications 9 à 11, dans lequel au moins deux couches sont constituées de la couche (102) et/ou de la couche avec du bitume (101) et la couche de renforcement du matériau de construction (10) est disposée entre les couches.

13. Matériau de construction (100) selon l'une des revendications 8 à 12, comprenant en outre au moins une couche de doublage (103), la couche de doublage comprenant la couche de renforcement du matériau de construction (10).

14. Matériau de construction (100) selon l'une des revendications 8 à 13, comprenant en outre une couche d'isolation (104), la couche de renforcement du matériau de construction (10) pouvant être disposée sur ou dans la couche d'isolation (104).
